# EUROPEAN PATENT SPECIFICATION

(11) **EP 3 763 095 B1**
(45) Date of publication and mention of the grant of the patent: **13.09.2023**
(21) Application number: 18909023.6
(22) Date of filing: 08.03.2018
(51) Int. Cl.: H04L 9/40, H04L 67/565, G06K 19/06, G06Q 20/22

(54) **METHOD FOR PROVIDING DATA SECURITY USING ONE-WAY TOKEN**
VERFAHREN ZUR BEREITSTELLUNG VON DATENSICHERHEIT UNTER VERWENDUNG VON EINWEG-TOKEN
PROCÉDÉ PERMETTANT D'ASSURER UNE SÉCURITÉ DE DONNÉES À L'AIDE D'UN JETON UNIDIRECTIONNEL

(43) Date of publication of application: 13.01.2021
(73) Proprietor: VISA INTERNATIONAL SERVICE ASSOCIATION, Foster City, CA 94404 (US)
(72) Inventor: KULPATI, Ashish, Gurgaon 122009 (IN); RAJURKAR, Pankaj, Indore 452001 (IN); SINGH, Shantnu, Singapore 529890 (SG); MODI, Vikram, Lafayette, California 94549 (US); NAYAK, Koni Uttam, Mumbai 400063 (IN)
(74) Representative: EIP
(86) International application number: PCT/US2018/021526
(87) International publication number: WO 2019/172911

(56) References cited:
- WO-A1-2012/067993
- US-A1- 2011 137 742
- US-A1- 2014 074 724
- US-A1- 2015 312 038
- US-A1- 2015 326 565
- US-A1- 2016 004 852
- US-A1- 2016 119 296
- US-A1- 2017 103 387
- BAMERT TOBIAS ET AL: "Have a snack, pay with Bitcoins", IEEE P2P 2013 PROCEEDINGS, IEEE, 9 September 2013 (2013-09-09), pages 1-5, XP032533531, DOI: 10.1109/P2P.2013.6688717 [retrieved on 2013-12-18]

## Description

### BACKGROUND

Conventional systems can transfer value from one user to another user. For example, in a conventional system for processing payments, a first user such as a cardholder may wish to transfer funds for a purchase to a second user such as a merchant. Before this can be done, however, the second user needs to register with an acquirer. The acquirer can set up an account for the second user, and can verify the authenticity of the second user. This process is burdensome and complicated, and can deter some from being able to accept the transfer of value using traditional payment networks.

There is a need to improve conventional payment processes such as the kind described above.

US2015/0326565 describes methods for authenticating a security device for providing a secure access and transaction authorization to a remote network location. The security device is authenticated by installing private security software on the security device. In order to authorize a transaction, a transaction authorization is performed using the security device by displaying a QR (Quick Response) code from an authorization server on a user terminal and scanning the QR code into the security device. After scanning the QR code, an OTA (One- Time-Authorization) code is sent from the security device to the authorization server for verifying the transaction.

WO2012/067993 describes a method of transferring value from a payer participant of a first online community website to a payee participant of a second online community website through a payment account translation system. The method includes initiating a first payment request, validating that the payer and payee are registered participants of the online community, translating the payer alias into a payer pseudo-account number using business rules and community participant profiles associated with the community website from which the payment request is made, and mapping the payer pseudo-account number to a respective funding/repository account primary account number (PAN). The method further includes transmitting the PANs and a validation code to a payments network for processing through the payments network and approving the transfer of value from the payer to the payee such that the PAN of the payer is unknown to the community website.

Embodiments address these and other problems, individually and collectively.

### BRIEF SUMMARY

According to a first aspect of the present invention there is provided a method according to claim 1.

According to a second aspect of the present invention there is provided a server computer according to claim 10.

Further details regarding embodiments of the invention can be found in the Detailed Description and the Figures described herein.

### BRIEF DESCRIPTION OF THE DRAWINGS

FIG. 1 shows a system for updating account data of interacting users according to embodiments.
FIG. 2 shows a server computer for facilitating updates between authorizing computers in an embodiment.
FIG. 3 shows a process for registering with a system using a credential device in an embodiment.
FIG. 4 shows a process for transferring funds to a payment card account using an issuer application according to an embodiment.
FIG. 5 shows a process for transferring funds to a payment card account using a payment processor according to an embodiment.

### TERMS

A "user" may refer to an individual. A user of a particular device or system, may be an individual that operates the device and/or according to the particular system implementation. For example, a user of a mobile phone may be the owner of the phone. As another example, a user of a payment system may be a consumer that conducts transactions using the payment system.

An "entity" may refer to a distinct actor or group of actors. For example, an entity may be a business entity, such as a corporation or bank, or may be a government entity.

A "computing device" may refer to a device for performing computations, namely as a means for executing a task according to instructions. In the context of computer networking, a computing device may be any electronic machine capable of receiving and processing instructions. The instructions are typically in the form of "computer-readable media," which may encompass computer code. It is common for computing devices to be "mobile" devices that users can carry around with them easily and perform everyday tasks, such as for making phone calls, accessing the internet, determining their location, and/or documenting events through pictures, videos, and/or audio recordings.

An "application" or "mobile application," colloquially referred to as an "app," may refer to a computer program for executing specified tasks. An application can be preinstalled or downloaded onto a device and stored in memory. When an application is launched on a device, it may provide select functions or "features" to a user, that may cause a device to execute different commands based on user inputs. For example, an application can be a camera app that activates a camera function of a mobile phone and takes a picture upon indication by the user. As another example, an application can be a payment app that transfers assets between users and/or entities by updating account ledgers.

A "credential" may refer to an element for proof of identity or ownership. For example, a credential can include a username and/or password. Credentials are often used in computer networks as a means of associating digital identities with human identities. In the context of payment networks, a credential can be an account identifier, such as a payment card number, routing number, bank account number, etc.

A "credential device" may refer to an object communicating one or more credentials. For example, a credential device may be a small object fitted with a memory storage of credentials in digital form, such as a credential card containing a magnetic strip or memory chip. In other examples, a credential device may simply be an object with credentials printed, embossed, or engraved onto it, which can be communicated by means of a scanner or other optical device. A credential device is typically portable, such that users can easily carry the credentials in their pocket, wallet, bag, or hand.

A "token" may refer to an exchangeable element. For example, a token may be a data element that can be exchanged for something of value, such as a coupon code or one-time access code. In some instances, a token can act as a substitute for a credential when used for a specialized purpose. As a simple example, a game token can act as an access credential for starting a game. As a more advanced example, a payment token can act as a value transfer limited to a specific payment context. In this manner, a token can be used to certify proof of access or proof of authorization without proof of identity or proof of ownership.

In some embodiments, a token may also include a substitute identifier for some information. For instance, a token may include a series of alphanumeric characters that may be used as a substitute for an original account identifier. In some cases, the token may be a payment token, which may include an identifier for a payment account that is a substitute for a real account identifier, such as a primary account number (PAN). For example, a token "4900 0000 0000 0001" may be used in place of a PAN "4147 0900 0000 1234." In some embodiments, a token may be "format preserving" and may have a numeric format that conforms to the account identifiers used in existing processing networks (e.g., ISO 8583 financial transaction message format). In some embodiments, a token may be used in place of a PAN to initiate, authorize, settle or resolve a payment transaction. The token may also be used to represent the original credential in other systems where the original credential would typically be provided. In some embodiments, a token value may be generated such that the recovery of the original PAN or other account identifier from the token value may not be computationally derived. In some embodiments, a token may be an e-mail ID or a mobile phone number, alias, or allocated "tag".

"Account information" may refer to any information associated with a user's account. Such information may be directly related to the account or may be derived from information related to the account. Examples of account information may include an account identifier, a username, a password, user information (e.g., name, age, email address, shipping address, etc.). In some cases, account information may also be known as payment account information, card account information, or the like, and may be associated with a payment device (e.g., payment card). For example, account information may include a PAN (Primary Account Number or "account number"), user name, expiration date, CVV (Card Verification Value), dCW (Dynamic Card Verification Value), CVV2 (Card Verification Value 2), CVC3 card verification values, etc.. CW2 is generally understood to be a static verification value associated with a payment device. CVV2 values are generally visible to a user (e.g., a user), whereas CVV and dCVV values are typically embedded in memory or authorization request messages and are not readily known to the user (although they are known to the issuer and payment processors).

A "resource providing entity" may be an entity that may make resources available to a user. Resource providing entities may also be known as resource providers. Examples of resource providing entities include resource providers, vendors, suppliers, owners, traders, wallet providers, service providers, and the like. In some embodiments, such entities may be a single individual, small groups of individuals, or larger groups of individuals (e.g., companies). Resource providing entities may be associated with one or more physical locations (e.g., supermarkets, malls, stores, etc.) and online platforms (e.g., e-commerce websites, online companies, etc.). In some embodiments, resource providing entities may make available physical items (e.g., goods, products, etc.) to the user. In other embodiments, resource providing entities may make available digital resources (e.g., electronic documents, electronic files, etc.) to the user. In other embodiments, resource providing entities may manage access to certain resources by the user. In some embodiments, the resources may be services (e.g., digital wallet services).

An "access request" may refer to a request for access to a resource. The resource may be a physical resource (e.g., good), digital resources (e.g., electronic document, electronic data, etc.), or services. In some cases, an access request may be submitted by transmission of an access request message that includes access request data. Typically a device associated with a requestor may transmit the access request message to a device associated with a resource provider.

"Access request data" may refer to any information surrounding or related to an access request. Access request data may include information useful for processing and/or verifying the access request. For example, access request data may include details associated with entities (e.g., resource provider computer, processor server computer, authorization computer, etc.) involved in processing the access request, such as entity identifiers (e.g., name, etc.), location information associated with the entities, and information indicating the type of entity (e.g., category code). Exemplary access request data may include information indicating an access request amount, an access request location, resources received (e.g., products, documents, etc.), information about the resources received (e.g., size, amount, type, etc.), resource providing entity data (e.g., resource provider data, document owner data, etc.), user data, date and time of an access request, a method utilized for conducting the access request (e.g., contact, contactless, etc.), and other relevant information. Access request data may also be known as access request information, transaction data, transaction information, or the like.

A "one-way token" may refer to a token that has been assigned a direction of exchange. For example, a one-way game token may be a token that only starts the game for player 2 but not player 1. As another example, in a payment transaction, a one-way token may be a deposit-only token that can act as a substitute for a payee's account credentials but never as a substitute for a payer's credentials.

An "interaction" may refer to an action between users and/or entities. For example, an interaction may be a face-to-face encounter and/or an exchange of information, data, or value.

An "interaction request" may refer to a request to interact such as in the context of controlled tasks that require authorization. In some embodiments, an interaction request may be an "access request." In the context of computer networking, interaction requests are often related to authorizing access to a database or manipulation of data stored therein. For example, in a social network, an interaction request may be a friend request that, when authorized, grants access to profile data. As another example, in a payment network, an interaction request may be a request to conduct a transaction, and when authorized, may permit an update to account ledgers.

An "interaction value" may refer to a quantity assigned to an interaction. For example, an interaction within a service application may be assigned a quality rating, such as "five-stars." In another example, an interaction within a social network may be assigned an interaction value of '1' for "favorable/liked interaction" or assigned an interaction value of '0' for "unfavorable/disliked" interaction. In yet another example, an interaction within a payment network may be assigned a currency amount, which can be a reflection of quantities of money transferred during the interaction, such as transaction amounts and/or fees.

An "interaction velocity" may refer to a rate at which a user or entity interacts. For example, an interaction velocity may be an average quantity of interactions per day or a total interaction value received per day.

An "update request message" may refer to a message requesting an update to information. In computer networking, the requested update may be an update of data in stored in a database. For example, in a payment network, a database of account balances can be requested during a payment transaction within the network.

An "update response message" may refer to a message responding to an update request. For example, the update response message may communicate a confirmation or denial of a requested update.

An "authorizing computer" may refer to a computer for authorizing requests. For example, an authorizing computer can be a device for access control or an access control server. In computer networking, an authorizing computer is often a server computer that authorizes access to data through verification of digital identities and/or permissions rights. For example, in a payment network, an authorizing computer may be a server computer of a bank that authorizes updates to account ledgers based on a verification of payment credentials and and/or account balances. An authorizing computer is often associated with an "issuer" or "issuing entity," which may be a bank that issues payment accounts and credentials thereof to users as a means for sending funds. For example, an issuing bank may be a bank that issues a debit card to a consumer such that they may transfer funds to a receiving party in a payment transaction.

A "server computer" can be a powerful computer or a cluster of computers. For example, the server computer can be a large mainframe, a minicomputer cluster, or a group of servers functioning as a unit. In one example, the server computer may be a database server coupled to a Web server.

### DETAILED DESCRIPTION

As previously mentioned, accepting card payments as a small merchant (i.e. an individual seller associated with small value transactions) has been largely viewed as impractical due to the nature of payment card networks. Embodiments describe a method for enabling small merchant transactions using existing payment card infrastructures and in a manner that is convenient for consumers. Embodiments allow for any cardholder to become a small merchant and accept payments from other cardholders, by virtue of a deposit-only token that can initiate a "push payment" such as a chargeback, or a credit push, to the payee's debit card account or other similar funds transfer to an issued financial account of the payee.

In one embodiment, a mobile device application can be provided to users, which may allow users to register as a small merchant or send payments to a small merchant registered within the system. To register as a merchant (e.g., a second user), a user can use the mobile device application to provide and generate their own merchant data, which may include card information, merchant name, merchant category, and merchant location, as well as set any notification settings within the application. Upon receiving the merchant data, a server computer may generate a deposit only token (e.g. a unique string) and may associate the deposit only token with the provided merchant data in a registration record. A confirmation can then be sent to the registering user, in which the user is supplied with a machine-readable code communicating the deposit-only token information (e.g. QR code). The QR code may be displayed from the registered user's mobile device, such that a prospective customer may scan the code using the camera on his or her smart phone and initiate payment.

When the registered user, now established as a small merchant in the system, is ready to accept a payment from a customer (e.g., a first user) in a transaction for goods or services, the customer may launch the mobile device application on his or her smart phone and use a provided camera interface to scan the small merchant's QR code. Upon scanning the QR code, the customer's smart phone may communicate the underlying deposit-only token to the customer's issuing bank, along with the customer's payment information and transaction amount. In one embodiment, the customer's payment information may be retrieved from within his or her mobile device, such as from the provided device application or other mobile application stored on the customer's device. The customer's issuing bank may receive the transaction information and initiate a funds transfer with a processing server computer of the system. The processing server computer may then receive the deposit-only token and query for the associated merchant data (which may be second user data), including the card information registered by the small merchant. In one embodiment, the server computer may also record each transaction and associated transaction amount, which can then be used to determine velocity-based merchant fees (e.g. fees associated with higher transaction volume merchants that put greater pressure on the system). The server computer may then replace the deposit-only token with the small merchant's payment card information in the funds transfer as well as subtract any associated fees from the transfer amount. The funds transfer is then forwarded to the small merchant's issuing bank, such that the issuing bank may update its ledgers accordingly.

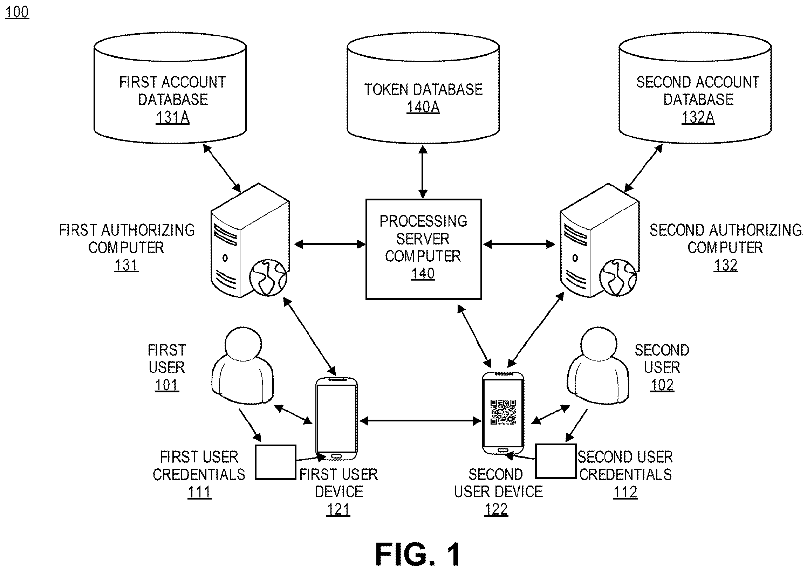

FIG. 1 shows a system for updating account data of interacting users according to embodiments. System 100 may comprise a plurality of interacting users including first user 101 and second user 102. System 100 may further comprise a first user device 121 of the first user 101 and similarly, a second user device 122 of the second user 102. First user device 121 and second user device 122 may be any computing device capable of transmitting and receiving data. For example, the user devices can be smart phones, tablets, wearable devices, hand-held assistants, portable gaming devices, laptops, computers, etc. System 100 may additionally comprise a first authorizing computer 131 capable of accessing and updating first account database 131A, as well as second authorizing computer 132 capable of accessing and updating second account database 132A. System 100 may further comprise a processing server computer 140 for processing interaction data and capable of accessing and updating token database 140A. It should be understood that system 100 may comprise one or more channels for data transmission between computing devices, such any number of suitable cellular, internet protocol, and/or ISO 8583 networks. It should further be understood that although FIG. 1 only shows a system comprising two interacting users, system 100 may support processing of a plurality of interactions simultaneously, and the individual computing devices and databases shown may be implemented as multiple computing devices for performing the same functions.

According to embodiments, the second user device 122 may contain a one-way token. In one embodiment, the one-way token may be provided to the second user 102 by the processing server computer 140 during a registration process, as described in further detail below. The one-way token may be used by the second user 102 to receive interaction values from a first user 101, and may be used to provide them to an account associated with his or her credentials, e.g., the second user credentials 112. For example, the one-way token may be a deposit-only token associated with the user's payment card number, to which funds may be allocated to during a transaction. The second user credentials 112 may include an account identifier, which can be a unique string of characters, such as a debit card number or primary account number (PAN). The one-way token itself may be a unique string of numbers of the same data format as the second user credentials 112. For example, the one-way token may be a 16-digit number that may be processed by the first authorizing computer 131 and the authorizing computer 132 as if it were a normal payment card number. In one embodiment, the one-way token information may be communicated via a machine-readable code (e.g. QR code or other optical label) that can be stored by the second user device 122. The second user device 122 can then send/display the machine readable code, so that the underlying one-way token can be obtained by another user's device during an interaction, such as by using a camera or other optical scanner.

In embodiments, the second user 102 may be a user that wishes to accept interaction values from the first user 101, such as in the context of receiving funds allocated for payment. For example, the second user 102 may be a seller of goods and the first user 101 may be a potential customer. In order to transfer interaction values to the second user 102, the first user 101 may use a first user device 121 to exchange interaction data with a second user device 122 of the second user 102. In embodiments, an interaction may be initiated when the first user 101 obtains the one-way token from the second user device 122 using the first user device 121. For example, a transaction may be initiated when the first user 101 scans deposit-only token information from a QR code on the second user device 122 using a camera interface of the first user device 121. This may be done from an application on the first user device 121, such as a mobile banking application or payments application. From within the application, the first user may also enter additional interaction details or transaction details including an interaction value such as a transaction amount associated with the interaction. In one embodiment, initiation of a transaction within the application may also generate a timestamp and/or transaction identifier (i.e., a transaction ID) which may be included with the interaction details.

The interaction details may further include first user credentials 111 for determining account data in a first account database 131A that is associated with the first user 101. The first user credentials 111 may be manually entered by the first user 101 (e.g. typing or scanning payment card information) or may be retrieved from a memory of the first user device 121. In one embodiment, the first user credentials 111 may comprise an account identifier, which can be used by the first authorizing computer 131 to query the first account database 131A for the first user 101's account data. For example, the account identifier may be a 16-digit primary account number that is linked to an amount of funds allocated to the first user 101 as well as a history of transactions. In embodiments, the first authorizing computer 131 may be capable of authorizing updates to the first account database 131A requested by the first user 101. For example, the first authorizing computer 131 may be a server computer of an issuing bank that may authorize or decline requested changes to a user's account balances during a requested transaction and/or transfer of funds.

Upon obtaining the one-way token from the second user device 122, the first user 101 may submit an update request message to the first authorizing computer 131 containing interaction details for a requested update to the first user 101's account data. This may include an interaction value, the first user credentials 111, and the one-way token obtained from the second user device 122. For example, the update request message may include a transaction amount, the first user 101's payment card information, and the deposit-only token of the second user 102. Upon receiving the update request message, the first authorizing computer 131 may verify the first user credentials 111 by comparing the first user credentials 111 to records stored in the first account database 131A and determining if account data for the first user credentials 111 exists based on a match. The first authorizing computer 131 may further determine if the requested update can be authorized. This may entail comparing the interaction value to a total allocated value linked to the first user 101's account in the first user account database 131A and then determining if the total allocated value exceeds the interaction value that is to be transferred to the second user 102 during the interaction. In other words, the first authorizing computer 131 may determine if the first user 101's account has been allocated enough funds to cover the transaction amount. If the first user 101's total allocated value is greater than the interaction value, the authorizing computer 131 may determine a positive authorization result (i.e. 'approved') and may proceed with processing the requested update. It should be understood that any number of additional authentication and/or risk evaluation processes may be applied by the first authorizing computer 131 when determining the authorization result, and the update request message may be further subject to additional authentication and/or risk evaluation processes by the processing server computer 140 and/or the second authorizing computer 132 later in the update process.

Once the first authorizing computer 131 has approved the requested update, the first authorizing computer 131 may then commit an update of the first user 101's account in the first account database 131A based on the interaction value and forward the update request message to the processing server computer 140. For example, the first authorizing computer 131 may commit a portion of funds equal to a given transaction amount specified in the transaction details. In one embodiment, the first authorizing computer 131 may include the authorization result in the update request message before forwarding.

The processing server computer 140 may then receive the update request message and may identify the one-way token contained therein. The processing server computer 140 may then compare the one-way token with records stored in the token database 140A. In one embodiment, the processing server computer may further use the interaction details to update an interaction velocity linked to the one-way token in the token database 140A, such as by evaluating interaction timestamps, interaction counters, and interaction values linked to the one-way token and calculating a quantity of interactions or total interaction value over time. For example, the processing server computer 140 may calculate a daily transaction rate based on previously recorded transactions linked to the deposit-only token of the second user 102. In other examples, the can include an average number of transactions per day, average number of transactions per week, total transaction amount per day, total transaction amount per week, per month, etc.

In one embodiment, the interaction velocity may be used by the processing server computer 140 to alter an interaction value, such as a reduction in the transaction amount contained in the update request message. For example, the processing server computer 140 may identify one or more predetermined interaction velocity limits, which may act as thresholds for subtracting one or more transaction fees. The transaction fees may then be distributed between the first authorizing computer 131, the processing server computer 140, and/or the second authorizing computer 132 as payment for maintaining the network and processing the transaction. As an example, the processing server computer 140 may deduct .05% of a transaction amount for an interaction velocity of above $50 per day while deducting only .01% of a transaction amount for an interaction velocity below $50 per day. It should be understood that any number of fee structures may be established for the system 100, which may be based on an availability and/or demand for processing resources required to process interaction data securely. An interaction velocity could also determine whether to prevent the completion of the transaction based upon previously set upper velocity threshold limits.

Upon identifying the deposit-only token in the update request message, the processing server computer 140 may determine a user account associated with the deposit-only token. This may be based on a query of token database 140A, wherein the processing server computer 140 queries for an account identifier that is associated with the deposit-only token. The account identifier associated with the deposit-only token may be an account identifier relating to the second user credentials 112. For example, the account identifier may be a 16-digit primary account number of the second user 102's payment card, which may have been assigned to the deposit-only token during a registration process undertaken by the second user 102, as described further below.

Upon determining the account identifier associated with the deposit-only token, the processing server computer 140 may identify an authorizing computer associated with the account identifier, such as the second authorizing computer 132. For example, the first 4 digits of a primary account number may identify a particular authorizing entity to which the processing server computer 140 may forward the update request message to, such that the second authorizing computer 132 may update an account ledger of the second user 102 according to the transaction details.

In embodiments, the processing server computer 140 may substitute the deposit-only token in the update request message with the account identifier relating to the second user credentials 112, and may submit the update request message to the identified second authorizing computer 132. The second authorizing computer 132 may receive the update request message and, upon verifying the included account identifier relating to the second user credentials 112, may update the second account database 132A based on the interaction details contained therein. For example, the second authorizing computer 132 may query the second account database 132A for an account identified by the seconds user 102's primary account number, and may then update his or her account using the transaction amount (i.e. adding the transaction amount to his or her account balance, minus any fees calculated by the processing server computer 140).

Upon updating the second account database 132A, the second authorizing computer 132 may send an update response message to the processing server computer 140 to confirm that the appropriate changes have been made. The processing server computer 140 may receive the update response message, and may forward the update response message with confirmation to the first authorizing computer 131. The processing server computer 140 may further send a confirmation notice to the second user device 122 that the updates have been processed according to the received interaction details. In one embodiment, the confirmation notice may be sent directly from the second authorizing computer 132 to the second user device 122. In embodiments, the first authorizing computer 131 may receive the update response message and confirmation provided therewith from the processing server computer 140, and may then perform the previously committed updates to first account database 131A. Upon performing the updates, the first authorizing computer 131 may then send a confirmation notice to the first user device 121 that the requested updates have been made, and therefore the transaction successfully processed.

As can be seen from the description of FIG. 1 above, system 100 allows for the processing of interactions between a first user and a second user. This is achieved through updates of first account databases and second account databases by a first authorizing computer and a second authorizing computer, respectively. The updates are initiated by the transmission of a one-way token associated with records in a token database. Furthermore, interaction values for the interaction can be adjusted between authorizing computers by a processing server computer based on interaction velocities associated with the one-way token. When applied to a payment network, this may allow for lower fees and reduced deterrence for small value transactions.

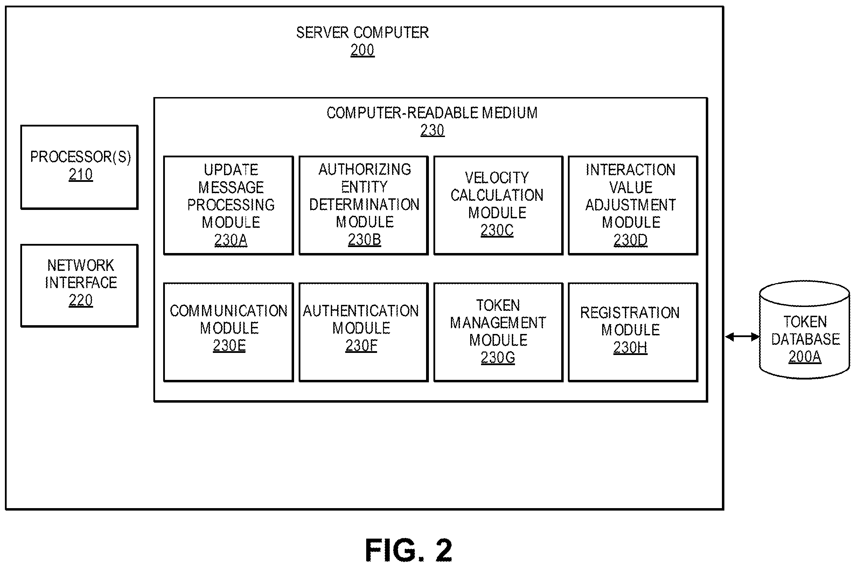

FIG. 2 shows a server computer for facilitating updates between authorizing computers in an embodiment. In embodiments, a server computer 200 may correspond to the processing server computer 140 of FIG. 1. The server computer 200 may comprise a processor(s) 210 for executing instructions. For example, processor(s) 210 may comprise any number of CPUs and/or GPUs for executing computer code for performing functions or tasks. The server computer 200 may further comprise a network interface 220 for receiving and transmitting data messages over a network. For example, network interface may include any hardware interface or network socket for connecting to a network having a particular communication protocol.

The server computer 200 may further comprise a computer-readable medium 230 storing instructions that can be executed by the processor 210 to perform tasks. For example, the computer-readable medium 230 may include one or more memory stores of data, such as random-access memory (RAM), dynamic random-access memory (DRAM), and/or direct access media. The instructions of the computer-readable medium 230 may be stored in the form of modules of code. The modules may include an update message processing module 230A, an authorizing entity determination module 230B, a velocity calculation module 230C, an interaction value adjustment module 230D, a communication module 230E, an authentication module 230F, a token management module 230G, and a registration module 230H. The server computer 200 may further have access to one or more external data stores and/or databases, such as a token database 200A.

The update message processing module 230A may comprise code for reading and modifying data in update request messages and update response messages. This may include code for receiving an update request message from an authorizing computer and identifying interaction details contained therein. In embodiments, the identification of interaction details may include a determination of a one-way token stored in the interaction details. The code may further comprise instructions for receiving an update response message from an authorizing computer and identifying information stored therein. For example, the code may include receiving a confirmation notice that can be forwarded to a user associated with the authorizing computer.

The authorizing computer determination module 230B may comprise code for determining one or more authorizing computers from data in an update message. This may include instructions for identifying an account identifier and determining an authorizing computer associated with the account identifier. For example, an account identifier may be an account number associated with a specific account issuer having one or more authorizing computers to which update messages can be routed to.

The velocity calculation module 230C may comprise code for calculating an interaction velocity associated with a one-way token received in an update message. The calculation of the interaction velocity may be based on records stored in token database 200A. For example, the velocity calculation module 230C may comprise instructions for using a transaction history linked to the one-way token to determine a quantity of interactions performed by the one-way token during a predefined time segment (e.g. one day or one week) and/or may determine a total transaction amount received by the one-way token during that segment of time.

The interaction value adjustment module 230D may comprise code for determining and executing interaction value adjustments for interaction data received update messages. In embodiments, interaction value adjustments may be determined based on interaction velocities associated with the one-way token in an interaction. In one embodiment, the interaction value adjustment module 230D may comprise instructions for determining a pre-established velocity limit, making a first interaction value adjustment when the interaction velocity is below the velocity limit, and making a second interaction value adjustment when the interaction velocity is above the velocity limit.

The communication module 230E may comprise code for generating, formatting, and reformatting data messages received over the network interface 220. For example, the communication module 230E may comprise code for generating and formatting ISO 8583 messages that communicate financial transaction information and authorization codes.

The authentication module 230F may comprise code for performing one or more authentication processes. For example, the authentication module 230F may comprise code for executing one or more risk analysis and credential verification processes.

The token management module 230G may comprise code for determining and substituting tokens received in data messages. This may include code for identifying a one-way token in a data message, querying a token database for account information linked to the one-way token, and substituting the one-way token in the data message with an account identifier that is associated with the one-way token according to queried account information.

The registration module 230H may comprise code for carrying out a registration process for users. This may include code for receiving registration data, storing the registration data in a database, generating a one-way token for association with the registration data, storing the one-way token in the database, linking the one-way token to the registration data and/or account data in the database, and sending a confirmation message to a user and/or authorizing entity associated with the account data containing the registration data and one-way token.

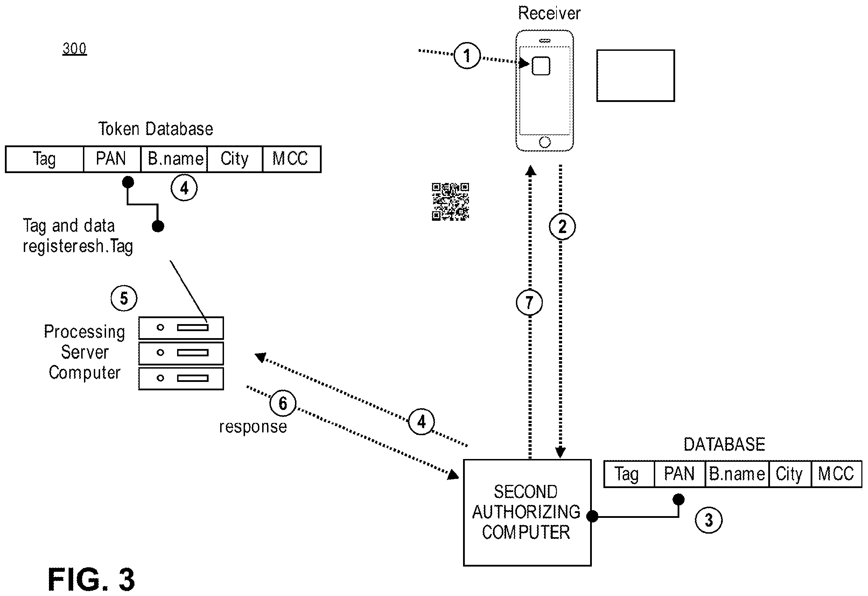

FIG. 3 shows a process for registering with a system using a credential device in an embodiment. The registration process 300 shown may be for registering to accept interaction values in the system 100 of FIG. 1. For example, the registration process may be for registering as a small merchant that accepts payments to his or her payment card account. In one embodiment, the registration process 300 may be performed by the second user 102 of FIG. 1.

At step 1, a receiver (payee) may enter his or her credentials and registration information into his or her device. In one embodiment, the registration information may include an alias, a location, and a user type. For example, the receiver may enter a merchant name, merchant location, and merchant category code (MCC) that can identify the user as a small merchant. In one embodiment, the receiver's credentials may include an account identifier, such as a primary account number of the receiver's payment card account. In one embodiment, the registration information and credentials may be entered into the device using a user interface of a mobile application provided by an authorizing entity or payment solutions provider. In another embodiment, the credentials may be retrieved by the mobile application from an allocated portion of memory in the device or from another stored application.

At step 2, the receiver sends the registration information to an authorizing computer associated with the receiver. In one embodiment, the authorizing computer may be identified based on the account identifier entered by the user. For example, the mobile application may route a data message (e.g. registration request message) to an authorizing computer of an issuing entity associated with the receiver's payment account number. The authorizing computer may be a server computer that that has access to the receiver's account data stored in an account database. For example, the authorizing computer may be one of several computers of an issuer banking system that maintains user account ledgers. In one embodiment, the registration data message may include a tag or other pointer that can be associated with the registration data.

At step 3, the authorizing computer stores a record of the receiver's registration information and associates the information to the receiver in an account database. For example, the authorizing computer may link the receiver's registration tag to his or her account identifier/payment card account.

At step 4, the authorizing computer may generate and send a registration API call to a processing server computer containing the receiver's registration information and account identifier. For example, the receiver's issuer may use an API provided by a card payments processor allowing the issuer to conduct registration of the receiver into the system.

At step 5, the processing server computer may receive the API call and generate a one-way token to associate with the receiver's registration information and account identifier. For example, the card payments processor may receive the registration API call and may then create a deposit-only token that is stored and linked to the receiver's registration tag, payment card number, and merchant information in a token database.

At step 6, the processing server computer may generate and send a registration response message comprising the one-way token to the authorizing computer. For example, the card payments processor may send a response to the receiver's issuer confirming successful registration of the receiver and communicating the receiver's deposit-only token.

At step 7, the authorizing computer may forward the registration response to the receiver. For example, the receiver's issuer may send the registration response over the communication channel established between the authorizing computer and the receiver's device. The receiver's device may then process the registration response by way of the stored mobile application. This may include communicating a registration confirmation to the receiver (e.g. displaying a message), storing the one-way token on the device, generating a machine-readable code containing one-way token information, and displaying the machine-readable code (e.g. QR code) to the receiver. The receiver can then use the one-way token to receive funds to his or her payment card account, such as by allowing a sender of funds to scan the QR code to initiate a transaction process. Examples of embodied transaction processes are described below.

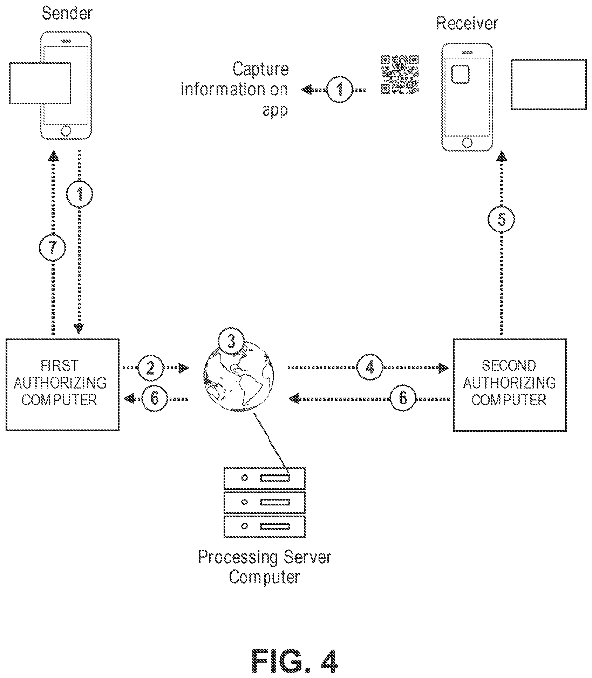

FIG. 4 shows a process for transferring funds to a payment card account using an issuer application according to an embodiment. In embodiments, the entities shown may represent the system 100 of FIG. 1, and the devices, computers, and servers/server computers may correspond to the devices, computer, server computers, and databases, shown in FIG. 1. This may include an interaction conducted between the first user 101 as a payer/sender and the second user 102 as a payee/receiver. The interaction may be processed as a sequence of database updates between issuing entities of each user in accordance with the description provided herein.

With reference to FIG. 4, at step 1, an interaction is initiated by a sender using his or her device to obtain one-way token information from a receiver's device. For example, a payer may initiate a transaction or funds transfer by scanning a QR code displayed by the payee's device. This may be done using a mobile application provided by the payee's issuer. For example, a mobile banking application may be installed onto the sender's mobile device, and may include an interface for activating the camera function of the device and for processing a machine-readable optical label captured/scanned by the camera when placed in view. The machine-readable optical label may be a QR code containing deposit-only token information. Upon processing the QR code and retrieving the one-way token contained therein, the issuer application may initiate an update request using the sender's credentials and details of the interaction. For example, the issuer application may generate an update request message containing allocated bits for each data element pertinent to the transaction (e.g. sender information, receiver token, amount, time, etc.). The credentials may be accessed by the issuer application from memory and/or manually entered by the sender. In embodiments, the credentials may include an account identifier for an account of the sender from which interaction value can be deducted. For example, the payment credentials may include a primary account number associated with payment card account data maintained by the issuer, such as historical transaction data and the like. The transaction details may include a transaction amount, a transaction timestamp and/or transaction ID/interaction identifier, as well as the one-way token information obtained from the receiver's device. In embodiments, a portion of the transaction details may be generated by the issuer application, such as the timestamp and interaction identifier. The update request may then be sent by the issuer application to an authorizing computer capable of updating the sender's account records.

At step 2, an authorizing computer associated with the sender's account receives the update request and initiates an update process within the system. For example, the authorizing computer may access an account database storing the sender's account data, and may commit an update to the database that is reflective of the received transaction details (e.g. deducting the transaction amount from the user's account and linking the deduction to the timestamp and/or transaction ID). Upon committing an update entry in the database, the authorizing computer may seek verification/authorization of the update from the other relevant parties in the interaction processing system. For example, an OCT push payment or other suitable funds transfer may be initiated with an intermediary payments processing provider/card payments processor and an authorizing computer of the payment receiver's account issuer. In embodiments, this may involve forwarding the update request message and information contained therein to a processing server computer of the card payment processor.

An OCT (Original Credit Transaction) is typically a clearing and settlement credit transaction designed for use in business applications such as a business money transfer or business-to-consumer repayments. When used in the context of the present invention for money transfer, the OCT is the transaction used to deliver funds to the recipient account.

The amount of the OCT is the amount agreed by the sender and the service provider in the currency agreed. If the recipient's billing currency is different from the currency agreed at the transaction time, currency conversion can be performed on the OCT and the exact amount credited to the recipient account may not be known at transaction time. In some cases, in the case of a cross-currency transaction, in order to avoid the confusion of determining the exact amount to credit in a recipient account, the currency conversion can be conducted by the sending client before submitting a transaction to a payment processing computer. In some embodiments, the OCT carries only the account number of the recipient and no information about the sender. A special indicator identifies an OCT to the recipient's issuer bank. Interchange can flow from the submitting acquirer to the recipient's issuer, as in a normal purchase transaction. Settlement can take place within a few days.

At step 3, a processing server computer receives the update request message and modifies it based on one-way token records. In embodiments, the modification may include: parsing the update request message to determine the one-way token, substituting the one-way token in the interaction details with the second user account identifier, and adjusting the interaction value in the update request message based on a calculated interaction velocity. For example, the processing server computer may query a token database for records linked to the one-way token, which may include the receiver's merchant data and payment card account number (account identifier). The processing server computer may then use historical records such as one-way token records to calculate an associated transaction velocity, such as by using timestamps and transaction amounts to calculate a daily transaction amount received per day. The associated transaction velocity may be compared to a threshold for performing an interaction value adjustment, such as min/max values for applying different transaction value reductions and/or re-allocation. Then, to modify the update request message, the processing server computer may substitute the one-way token with the receiver's payment card number and adjust the interaction value accordingly. The processing server computer may further update one-way token records in the token database to reflect the current transaction.

At step 4, the processing server computer sends the modified update request message to an authorizing computer (second authorizing computer) associated with the receiver's account, as identified by the second user account identifier determined in step 3. For example, the processing server computer may compare the receiver's transaction details (e.g. account number and location) to a directory of routing addresses relating to authorizing computers acting as nodes in the payment system. In embodiments, the second authorizing computer may be a server computer of the receiver's issuing bank, which may have access to the receiver's payment account records. The second authorizing computer may receive the update request message, update the receiver's account according to the interaction details contained therein, and may generate an update response message. For example, the second authorizing computer may update the receiver's account balance in an account database and add the transaction details to the receiver's transaction history. In one embodiment, the update response message may include merchant data or tag information associated with the one-way token for the transaction, including merchant name, merchant location, and/or merchant category code (MCC). The merchant data and/or tag information may include registered merchant information associated with the receiver during a registration process, such as during the process described in FIG. 3.

At step 5, the second authorizing computer sends the receiver a notification that account updates have been made and the interaction processed. For example, the second authorizing computer may identify a device associated with the second user's account, such as by querying a device or application identifier linked to the receiver's merchant tag, and may then send a notification with the transaction details and updates to the receiver's device. In one embodiment, the notification may be received by the receiver on his or her device from an issuer application, which may be the same or similar application used by the sender, and which may also be an application that provided the means to display/send the one-way token to the sender when the interaction was initiated. In an embodiment, the issuer application may be the same application used by the receiver in registration process 300 illustrated by FIG. 3.

At step 6, the second authorizing computer may send the update response message generated in step 4 to the processing server computer for forwarding to the authorizing computer of the sender (first authorizing computer). The first authorizing computer may receive the update response message and may perform the committed updates. For example, the first authorizing computer may execute a reduction to the sender's account balance according to the original pending transaction amount. In one embodiment, the update may include adding the merchant data to the transaction details, such that the sender can view and verify the merchant information in his or her transaction history at a later point in time.

At step 7, the first authorizing computer sends a notification to the sender that the updates have been made and the interaction processed. For example, the first authorizing computer may send a confirmation notice with the transaction details to the issuer application on the sender's device. In other embodiments, a similar interaction process may be carried out on a third-party application, such as that of a card payments provider or digital wallet provider, as described below.

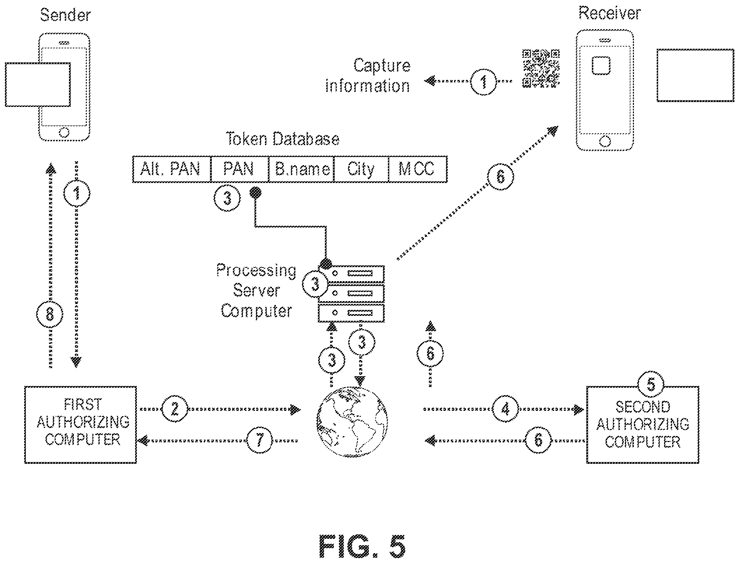

FIG. 5 shows a process for transferring funds to a payment card account using a payment processor application according to an embodiment. In embodiments, the process shown may correspond to a process involving the same parties as involved in the process of FIG. 4. In the process in FIG. 5, a processing server computer may notify a receiver, instead of a second authorizing computer as in the embodiment in FIG. 4.

At step 1 the payer/sender initiates a transaction after a scan of the receiver's merchant information. For example, the payer may scan a QR code displayed on the receiver mobile device, which may signal the payer's device to request a funds transfer according to the agreed upon transaction amount.

At step 2, the sender's issuer receives the transaction information and sends a funds transfer to a processing server computer. For example, the sender's issuer may commit or allocate a portion of funds for covering the transaction amount and may inform an intermediary payments processor to push the allocated funds to another issuing bank's ledgers.

At step 3, the processing server computer retrieves an account identifier linked to a one-way token included in the transaction information. For example, a deposit-only token transferred via the receiver's merchant QR code may be used to query for merchant tag information. The merchant tag information may be associated with registration information of the receiver in a token database, such as the receiver's payment card number (PAN), registered merchant name, merchant location, and merchant category code, and transaction history. The processing server computer may then modify the funds transfer according to predetermined fee calculations corresponding to set transaction velocity limits associated with receivers of varying daily transaction volume, daily value transfer, or other interaction frequency-based metric.

At step 4, the processing server computer may then forward the funds transfer with the updated transaction information to the receiver's issuer. The funds transfer may include the receiver's merchant information (i.e. payment card number, merchant name, location, MCC, etc.) as well as a transaction amount with fee calculation.

At step 5, the receiver's issuer updates an account database including updates to the receiver's account data. For example, the receiver's bank may add the reduced transaction amount to his or her account balance, and may update its own allocated deposit account for collecting its share of the calculated fee.

At step 6, the receiver's issuer sends a response message to the processing server computer, which can also initiate a notification to be sent to the receiver that the transaction has been successfully processed. For example, the receiver's issuer may initiate an API call to the processing server computer, which may forward a processed payment confirmation to the receiver using a provided digital wallet or other third-party payment application.

At step 7, the processing server computer forwards the response message to the sender's issuer. For example, the processing server computer may confirm with the sender's issuer that the funds successfully transferred and that the sender's issuer may update their ledgers accordingly.

At step 8, the sender's issuer sends a notification to the sender that the transaction has been successfully processed. For example, the sender may send a confirmation notice to the sender's device via the payments application used to initiate the transaction.

Embodiments provide a number of technical advantages. Embodiments allow computers in a payment processing network to assess the effect of a particular receiving node on network traffic and may charge variable network fees accordingly, thus providing an avenue for smaller merchants and small transaction value acceptance within the network. Furthermore, embodiments provide a one-way (e.g. deposit-only) token that is only valid for a single direction of interaction value transfer, thus allowing users to receive digital funds to their payment card accounts without revealing their payment card numbers or providing others (e.g. hackers or criminals) with a means for to using the token to withdraw funds. Thus, users can easily receive payments to their already existing payment card accounts in a secure and efficient manner.

Any of the software components or functions described in this application may be implemented as software code to be executed by a processor using any suitable computer language such as, for example, Java, C++ or Perl using, for example, conventional or object-oriented techniques. The software code may be stored as a series of instructions, or commands on a computer-readable medium, such as a random access memory (RAM), a read-only memory (ROM), a magnetic medium such as a hard-drive or a floppy disk, or an optical medium such as a CD-ROM. Any such computer-readable medium may reside on or within a single computational apparatus, and may be present on or within different computational apparatuses within a system or network.

As used herein, the use of "a", "an" or "the" is intended to mean "at least one", unless specifically indicated to the contrary.

## Claims

1. A method comprising:
scanning by a first user device of a first user a machine-readable optical label displayed on a second user device (122) of a second user (102), wherein the machine-readable optical label contains a one-way token;
an issuer application on the first user device initiating an update request message including the one-way token and sending the update request message to a first authorizing computer (131);
receiving, by a server computer (140) from the first authorizing computer (131), the update request message including an interaction request for an interaction between the first user (101) and the second user (102), the interaction request comprising interaction details including the one-way token and an interaction value, the interaction transferring the interaction value from the first user (101) to the second user (102);
parsing, by the server computer (140), the update request message to determine the one-way token;
determining, by the server computer (140), a second user account identifier for a second account of the second user from the one-way token;
substituting, by the server computer (140), the second user account identifier for the one-way token in the interaction details so as to include the second user account identifier in the update request message;
determining, by the server computer (140), a second authorizing computer (132) associated with the second user account identifier;
sending, by the server computer (140), to the second authorizing computer (132), the update request message; and
receiving, by the server computer (140), an update response message from the second authorizing computer (132), wherein the second authorizing computer (132) updates the second account of the second user (102) based on the interaction details.

2. The method of claim 1, wherein the one-way token has a same data format as the second user account identifier.

3. The method of claim 1, further comprising:
determining, by the server computer (140), an interaction velocity of the one-way token, wherein the interaction velocity is an average quantity of interactions per day or a total interaction value received per day; and
adjusting, by the server computer (140), the interaction value in the update request message based on the interaction velocity.

4. The method of claim 3, wherein the interaction details comprise a timestamp and a transaction identifier.

5. The method of claim 4, further comprising:
updating a token database (140A) with the interaction details, wherein the interaction velocity for the one-way token is determined by using historical records associated with the one-way token in the token database (140A) to calculate a total interaction value over a time segment.

6. The method of claim 1, further comprising:
transmitting the update response message from the server computer (140) to the first authorizing computer (131).

7. The method of claim 1, wherein prior to the server computer receiving the update request message, the first authorizing computer (131) allocates a portion of funds of a first account of the first user based on the interaction details, and wherein subsequent to the server computer (140) receiving the update response message the first authorizing computer (131) executes a reduction in the first account according to the pending interaction details.

8. The method of claim 1, further comprising:
receiving, by the server computer (140), a registration request message comprising the second user account identifier and second user data;
generating, by the server computer (140), the one-way token;
associating, by the server computer (140), the one-way token to the second user account identifier; and
sending, by the server computer (140), a registration response message comprising the one-way token to a second user device of the second user.

9. The method of claim 8, wherein the update response message includes the second user data.

10. A system (140) comprising:
a plurality of apparatus configured to carry out a method according to any of the preceding claims.

## Patentansprüche

1. Verfahren, umfassend:
Scannen durch ein erstes Benutzergerät eines ersten Benutzers eines maschinenlesbaren optischen Etiketts, das auf einem zweiten Benutzergerät (122) eines zweiten Benutzers (102) angezeigt wird, wobei das maschinenlesbare optische Etikett einen Einweg-Token enthält;
eine Ausstelleranwendung auf dem ersten Benutzergerät, die eine Aktualisierungsanforderungsnachricht initiiert, die den Einweg-Token beinhaltet, und welche die Aktualisierungsanforderungsnachricht an einen ersten autorisierenden Computer (131) sendet;
Empfangen, durch einen Server-Computer (140) von dem ersten autorisierenden Computer (131), der Aktualisierungsanforderungsnachricht, die eine Interaktionsanforderung für eine Interaktion zwischen dem ersten Benutzer (101) und dem zweiten Benutzer (102) beinhaltet, wobei die Interaktionsanforderung Interaktionsdetails umfasst, die den Einweg-Token und einen Interaktionswert beinhalten, wobei die Interaktion den Interaktionswert von dem ersten Benutzer (101) zu dem zweiten Benutzer (102) überträgt;
Parsen, durch den Server-Computer (140), der Aktualisierungsanforderungsnachricht, um den Einweg-Token zu bestimmen;
Bestimmen, durch den Server-Computer (140), einer zweiten Benutzerkonto-Kennung für ein zweites Konto des zweiten Benutzers aus dem Einweg-Token;
Ersetzen, durch den Server-Computer (140), der zweiten Benutzerkonto-Kennung für den Einweg-Token in den Interaktionsdetails, sodass die zweite Benutzerkonto-Kennung in der Aktualisierungsanforderungsnachricht enthalten ist;
Bestimmen, durch den Server-Computer (140), eines zweiten autorisierenden Computers (132), welcher der zweiten Benutzerkonto-Kennung zugeordnet ist;
Senden, durch den Server-Computer (140), an den zweiten autorisierenden Computer (132), der Aktualisierungsanforderungsnachricht; und
Empfangen, durch den Server-Computer (140), einer Aktualisierungsantwortnachricht von dem zweiten autorisierenden Computer (132), wobei der zweite autorisierende Computer (132) das zweite Konto des zweiten Benutzers (102) basierend auf den Interaktionsdetails aktualisiert.

2. Verfahren nach Anspruch 1, wobei der Einweg-Token das gleiche Datenformat aufweist wie die zweite Benutzerkonto-Kennung.

3. Verfahren nach Anspruch 1, ferner umfassend:
Bestimmen, durch den Server-Computer (140), einer Interaktionsgeschwindigkeit des Einweg-Token, wobei die Interaktionsgeschwindigkeit eine durchschnittliche Menge von Interaktionen pro Tag oder ein pro Tag empfangener Gesamtinteraktionswert ist; und
Anpassen, durch den Server-Computer (140), des Interaktionswerts in der Aktualisierungsanforderungsnachricht basierend auf der Interaktionsgeschwindigkeit.

4. Verfahren nach Anspruch 3, wobei die Interaktionsdetails einen Zeitstempel und einen Transaktionsidentifikator umfassen.

5. Verfahren nach Anspruch 4, ferner umfassend:
Aktualisieren einer Token-Datenbank (140A) mit den Interaktionsdetails, wobei die Interaktionsgeschwindigkeit für den Einweg-Token unter Verwendung von historischen Aufzeichnungen, die dem Einweg-Token in der Token-Datenbank (140A) zugeordnet sind, bestimmt wird, um einen Gesamtinteraktionswert über ein Zeitsegment zu berechnen.

6. Verfahren nach Anspruch 1, ferner umfassend:
Übertragen der Aktualisierungsantwortnachricht von dem Server-Computer (140) an den ersten autorisierenden Computer (131).

7. Verfahren nach Anspruch 1, wobei, vor dem Empfangen der Aktualisierungsanforderungsnachricht durch den Server-Computer, der erste autorisierende Computer (131) basierend auf den Interaktionsdetails einen Teil von Geldmitteln eines ersten Kontos des ersten Benutzers zuweist, und wobei, nach dem Empfangen der Aktualisierungsantwortnachricht durch den Server-Computer (140), der erste autorisierende Computer (131) eine Reduzierung des ersten Kontos gemäß den anhängigen Interaktionsdetails ausführt.

8. Verfahren nach Anspruch 1, ferner umfassend:
Empfangen, durch den Server-Computer (140), einer Registrierungsanforderungsnachricht, welche die zweite Benutzerkonto-Kennung und zweite Benutzerdaten umfasst;
Erzeugen, durch den Server-Computer (140), des Einweg-Token;
Zuordnen, durch den Server-Computer (140), des Einweg-Token zu der zweiten Benutzerkonto-Kennung; und
Senden, durch den Server-Computer (140), einer Registrierungsantwortnachricht, die den Einweg-Token umfasst, an ein zweites Benutzergerät des zweiten Benutzers.

9. Verfahren nach Anspruch 8, wobei die Aktualisierungsantwortnachricht die zweiten Benutzerdaten beinhaltet.

10. System (140), umfassend:
eine Vielzahl von Vorrichtungen, die zum Durchführen eines Verfahrens nach einem der vorhergehenden Ansprüche konfiguriert sind.

## Revendications

1. Procédé comprenant :
le balayage par un premier dispositif utilisateur d'un premier utilisateur d'une étiquette optique lisible par machine affichée sur un deuxième dispositif utilisateur (122) d'un deuxième utilisateur (102), dans lequel l'étiquette optique lisible par machine contient un jeton unidirectionnel ;
une application émettrice sur le premier dispositif utilisateur lançant un message de demande de mise à jour comportant le jeton unidirectionnel et envoyant le message de demande de mise à jour à un premier ordinateur d'autorisation (131) ;
la réception, par un ordinateur serveur (140) depuis le premier ordinateur d'autorisation (131), du message de demande de mise à jour comportant une demande d'interaction pour une interaction entre le premier utilisateur (101) et le deuxième utilisateur (102), la demande d'interaction comprenant des détails d'interaction comportant le jeton unidirectionnel et une valeur d'interaction, l'interaction transférant la valeur d'interaction du premier utilisateur (101) au deuxième utilisateur (102) ;
l'analyse, par l'ordinateur serveur (140), du message de demande de mise à jour pour déterminer le jeton unidirectionnel ;
la détermination, par l'ordinateur serveur (140), d'un deuxième identifiant de compte utilisateur pour un deuxième compte du deuxième utilisateur à partir du jeton unidirectionnel ;
la substitution, par l'ordinateur serveur (140), du deuxième identifiant de compte utilisateur pour le jeton unidirectionnel dans les détails d'interaction de manière à inclure le deuxième identifiant de compte utilisateur dans le message de demande de mise à jour ;
la détermination, par l'ordinateur serveur (140), d'un deuxième ordinateur d'autorisation (132) associé au deuxième identifiant de compte utilisateur ;
l'envoi, par l'ordinateur serveur (140), au deuxième ordinateur d'autorisation (132), du message de demande de mise à jour ; et
la réception, par l'ordinateur serveur (140), d'un message de réponse de mise à jour provenant du deuxième ordinateur d'autorisation (132), dans lequel le deuxième ordinateur d'autorisation (132) met à jour le deuxième compte du deuxième utilisateur (102) sur la base des détails d'interaction.

2. Procédé selon la revendication 1, dans lequel le jeton unidirectionnel a un même format de données que le deuxième identifiant de compte utilisateur.

3. Procédé selon la revendication 1, comprenant en outre :
la détermination, par l'ordinateur serveur (140), d'une vitesse d'interaction du jeton unidirectionnel, dans lequel la vitesse d'interaction est une quantité moyenne d'interactions par jour ou une valeur d'interaction totale reçue par jour ; et
le réglage, par l'ordinateur serveur (140), de la valeur d'interaction dans le message de demande de mise à jour sur la base de la vitesse d'interaction.

4. Procédé selon la revendication 3, dans lequel les détails d'interaction comprennent une estampille temporelle et un identifiant de transaction.

5. Procédé selon la revendication 4, comprenant en outre :
la mise à jour d'une base de données de jetons (140A) avec les détails d'interaction, dans lequel la vitesse d'interaction pour le jeton unidirectionnel est déterminée en utilisant des enregistrements historiques associés au jeton unidirectionnel dans la base de données de jetons (140A) pour calculer une valeur d'interaction totale sur un segment temporel.

6. Procédé selon la revendication 1, comprenant en outre :
la transmission du message de réponse de mise à jour de l'ordinateur serveur (140) au premier ordinateur d'autorisation (131) .

7. Procédé selon la revendication 1, dans lequel, avant que l'ordinateur serveur ne reçoive le message de demande de mise à jour, le premier ordinateur d'autorisation (131) attribue une partie des fonds d'un premier compte du premier utilisateur sur la base des détails d'interaction, et dans lequel, après que l'ordinateur serveur (140) a reçu le message de réponse de mise à jour, le premier ordinateur d'autorisation (131) exécute une réduction du premier compte selon les détails d'interaction en attente.

8. Procédé selon la revendication 1, comprenant en outre :
la réception, par l'ordinateur serveur (140), d'un message de demande d'enregistrement comprenant le deuxième identifiant de compte utilisateur et les deuxièmes données d'utilisateur ;
la génération, par l'ordinateur serveur (140), du jeton unidirectionnel ;
l'association, par l'ordinateur serveur (140), du jeton unidirectionnel au deuxième identifiant de compte utilisateur ; et
l'envoi, par l'ordinateur serveur (140), d'un message de réponse d'enregistrement comprenant le jeton unidirectionnel à un deuxième dispositif utilisateur du deuxième utilisateur.

9. Procédé selon la revendication 8, dans lequel le message de réponse de mise à jour comporte les deuxièmes données d'utilisateur.

10. Système (140) comprenant :
une pluralité d'appareils configurés pour effectuer un procédé selon l'une quelconque des revendications précédentes.
